(19) Europäisches Patentamt
European Patent Office
Office européen des brevets

(11) **EP 4 589 899 A1**

(12) **EUROPEAN PATENT APPLICATION**

(43) Date of publication:
**23.07.2025  Bulletin 2025/30**

(21) Application number: **25151882.5**

(22) Date of filing: **15.01.2025**

(51) International Patent Classification (IPC):
**H04L 27/02** (2006.01)   **H04L 5/00** (2006.01)
**H04L 1/00** (2006.01)   **H04W 52/02** (2009.01)

(52) Cooperative Patent Classification (CPC):
**H04L 27/02; H04L 5/006; H04W 52/0216;
H04W 52/0229; H04W 52/0235;** H04L 1/0003;
H04W 68/025

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.01.2024  GB 202400751**

(71) Applicant: **Nokia Technologies Oy
02610 Espoo (FI)**

(72) Inventors:
• **VENKATRAMAN, Ganesh**
  **Oulu (FI)**
• **KAIKKONEN, Jorma Johannes**
  **Oulu (FI)**
• **KINNUNEN, Pasi Eino Tapio**
  **Oulu (FI)**
• **SETHI, Alok**
  **Oulu (FI)**

(74) Representative: **Nokia EPO representatives
Nokia Technologies Oy
Karakaari 7
02610 Espoo (FI)**

(54) **LOW POWER WAKE-UP SIGNAL RECEPTION**

(57)    Example embodiments of the present disclosure generally relate to methods, devices, apparatuses and computer readable storage medium for the low power wake-up signal (LP-WUS). The method comprises: The method comprises: determining, at a user device based on at least one condition of the user device, a superposition encoding level to be used by the user device for a detection of a LP-WUS received from a network node; and detecting the LP-WUS based on the determined superposition encoding level.

FIG. 5

EP 4 589 899 A1

## Description

### FIELDS

Various example embodiments of the present disclosure generally relate to the field of telecommunication and in particular, to methods, devices, apparatuses and computer readable storage medium for the low power wake-up signal (LP-WUS) reception.

### BACKGROUND

The study of LP-WUS and low power wake-up receiver (LP-WUR) in 5G new radio (NR) may enable more power efficient operation on user equipment (UE) and more optimal resource allocation for network. The UE can be in a sleep mode (or even powered off) for power saving and be activated only upon the reception of the LP-WUS from the network.

### SUMMARY

In a first aspect of the present disclosure, there is provided an apparatus. The apparatus comprises at least one processor; and at least one memory storing instructions that, when executed by the at least one processor, cause the apparatus at least to: determine, based on at least one condition of the apparatus, a superposition encoding level to be used by the apparatus for a detection of a LP-WUS received from a network node; and detect the LP-WUS based on the determined superposition encoding level.

In a second aspect of the present disclosure, there is provided a method. The method comprises: determining, at a user device based on at least one condition of the user device, a superposition encoding level to be used by the user device for a detection of a LP-WUS received from a network node; and detecting the LP-WUS based on the determined superposition encoding level.

In a third aspect of the present disclosure, there is provided an apparatus. The apparatus comprises means for determining, based on at least one condition of the apparatus, a superposition encoding level to be used by the apparatus for a detection of a LP-WUS received from a network node; and means for detecting the LP-WUS based on the determined superposition encoding level.

In a fourth aspect of the present disclosure, there is provided a computer readable medium. The computer readable medium comprises instructions stored thereon for causing an apparatus to perform at least the method according to the second aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:

FIG. 1 illustrates an example communication environment in which example embodiments of the present disclosure can be implemented;

FIG. 2 illustrates a signaling chart of an example process of LP-WUS transmission according to some example embodiments of the present disclosure;

FIG. 3 illustrates an example for superposition encoding according to some example embodiments of the present disclosure;

FIG. 4 illustrates an example of encoding subgroups according to some example embodiments of the present disclosure;

FIG. 5 illustrates a flowchart of a method implemented at an apparatus according to some example embodiments of the present disclosure;

FIG. 6 illustrates a simplified block diagram of a device that is suitable for implementing example embodiments of the present disclosure; and

FIG. 7 illustrates a block diagram of an example computer readable medium in accordance with some example embodiments of the present disclosure.

Throughout the drawings, the same or similar reference numerals represent the same or similar element.

## DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

A study of LP-WUS and LP-WUR has been discussed for NR. This study considers the usage of a separate low-power wake-up receiver at the UE and evaluates how that can reduce the UE power consumption.

The LP-WUR may not be a separate receiver and can be implemented as a part of the Main Radio (MR). The intention is that the MR of the UE can be in a sleep mode (or even powered off) for power saving and be activated upon the reception of the WUS from the network. Basically, the network triggers the UE to wake-up exactly when needed in an event-driven manner, by transmitting a special WUS to the UE, which is monitored by the LP-WUR at the UE. When a UE receives the WUS, the LP-WUR can trigger the wake-up of the ordinary NR transceiver and communication can start. Thus, the ultra-low power receiver wakes up the MR and otherwise, the MR is OFF or kept in a deep sleep mode.

LP-WUS is currently considered for both IDLE/INACTIVE mode and Connected mode. Current discussions mainly focused on DL reception where LP-WUS can be used to wake up the MR to receive physical downlink control channel (PDCCH)/ physical downlink shared channel (PDSCH) e.g., for paging or other data.

The study item in relation to possible LP-WUS content includes the objectives listed below.

Table 1

| |
|---|
| • For IDLE/INACTIVE mode study at least following candidates for content of LP-WUS<br>  ○ information on which user(s) is/are targeted by the LP-WUS<br>    ▪ e.g., UE-group, -subgroup or -ID<br>  ○ FFS: cell information<br>  ○ FFS: SI change and ETWS/CMAS information, tracking area information,<br>  and RAN area information<br>• For CONNECTED mode, study at least following candidates for content of LP-WUS<br>  ○ information on which user(s) is/are targeted by the LP-WUS<br>    ▪ e.g., UE-group, -subgroup or -ID<br>  ○ indication to wake-up to PDCCH monitoring.<br>• Other information candidates are not precluded.<br>• Study pros and cons of including above information to LP-WUS.<br>Note: the information may be explicitly or implicitly indicated. |

To enable the LP-WUR maintain synchronization to the cell, introduction of Low Power Synchronization Signal (LP-SS) was considered. The study on LP-SS includes the objectives listed below.

Table 2

| |
|---|
| • At least for LP-WUR that cannot receive existing PSS/SSS, periodic LP-SS signal is beneficial for the following functionality.<br>• RRM measurements by LP-WUR, if supported<br>• at least coarse time synchronization of LP-WUR.<br>• at least coarse frequency synchronization of LP-WUR.<br>• Additional periodic LP-SS system overhead depends on LP-SS periodicity, system bandwidth (BW), # of beams, and resource required to fulfil the target functionality, etc. Periodic signal if used for coarse synchronization may reduce overhead of signal preceding LP-WUS, if any. LP-SS can be designed to be common among UE groups (cell-specific) and such further reduce system overhead.<br>• For LP-WUR that can receive existing primary Synchronization Signal (PSS)/ Secondary Synchronization Signal (SSS) potentially assisted by physical broadcast channel (PBCH) demodulation reference signal (DMRS)/ Tracking Reference Signal (TRS) for synchronization, existing PSS/SSS potentially assisted by PBCH DMRS/TRS may be used for above functionality.<br>• Periodic LP-SS coverage should be equal or better than that of LP-WUS.<br>For fine time and frequency synchronization, a signal (e.g., preamble) preceding or part of LP-WUS may be used. |

Moreover, a further related work item for LP-WUS includes the objectives listed below.

Table 3

| |
|---|
| The objectives of the work item are the following:<br>  • To specify an LP-WUS design commonly applicable to both IDLE/INACTIVE and CONNECTED modes (RAN1, RAN4)<br>    • Specify OOK (OOK-1 and/or OOK-4) based LP-WUS with overlaid OFDM sequence(s) over OOK symbol<br>      • The LP-WUS design shall ensure that for IDLE/INACTIVE operation, the same information is delivered irrespective of LP-WUR type. The OFDM sequence can carry information.<br>    • At least duty-cycled monitoring of LP-WUS is supported<br>  • For IDLE/INACTIVE modes<br>    • Specify procedure and configuration of LP-WUS indicating paging monitoring triggered by LP-WUS, including at least configuration, sub-grouping and entry/exit condition for LP-WUS monitoring (RAN2, RAN1, RAN3, RAN4)<br>    • Specify LP-SS with periodicity with Yms for LP-WUR, for synchronization and/or RRM for serving cell. (RAN1, RAN4)<br>      • LP-SS is based on OOK-1 and/or OOK-4 waveform with or without overlaid OFDM sequences. Further down selection between with and without overlaid OFDM sequences is to be done within WI. |

(continued)

- Note: For LP-WUR that can receive existing PSS/SSS, existing PSS/SSS can be used for synchronization and RRM instead of LP-SS.
- Y will be decided within WI. 320ms is the start point.
- Specify further RRM relaxation of UE MR for both serving and neighbor cell measurements, and UE serving cell RRM measurement offloaded from MR to LP-WUR, including the necessary conditions (RAN4, RAN2)
- For CONNECTED mode, specify procedures to allow UE MR PDCCH monitoring triggered by LP-WUS including activation and deactivation procedure of LP-WUS monitoring (RAN2, RAN1)
    - Check in RAN#105 for potential TU adjustment in RAN2
    - Note: In CONNECTED mode, UE MR ultra-deep sleep is not considered, and UE RRM/RLM/BFD/CSI measurements are performed by MR
- Note: The target coverage of LP-WUS and LP-SS shall be the coverage of PUSCH for message3.
- Note: The optimization of LP-WUS signal design for idle/inactive mode is prioritized over the optimization for connected mode.
- Specify the necessary RAN4 core requirement(s) to support the feature (RAN4).
    - This objective is to be further refined in RAN#103

As described above, the LP-WUS was introduced as a study item to reduce the overall power consumption of a user device (e.g., an enhanced Mobile Broadband (eMBB) device or a Reduced Capability (RedCap) device) without significantly impacting latency. To achieve this, the MR is equipped with a Low-power wake-up Radio (LR), which will monitor continuously or discretely for a wake-up signal from the gNB while the MR is in an ultra-deep sleep state. The concept of ultra-deep sleep refers to a sleep state where most clock sources and components may be powered down to reduce the power consumption.

During the study item phase, various alternative actions may be triggered by LP-WUS detection. In the IDLE/Inactive mode, upon receiving the wake-up signal from the gNB, the LR could wake up the MR to perform at least one of the following actions: monitoring the Paging Downlink Control Channel (PDCCH), monitoring the Early Paging Indicator (EPI), or initiating the Random Access Channel (RACH) procedure if the LP-WUS carries the UE ID (Temporary Mobile Subscriber Identity, TMSI).

The above procedure would impact the content of LP-WUS information, and the determination of which procedure(s) will be supported needs to be made.

Since the LR is designed to reduce the power consumption, the design of LP-WUS primarily focuses on utilizing a waveform based on On-Off Keying (OOK). In OOK, the carrier signal is divided into ON durations and OFF durations, where the carrier signal is either turned on or off to represent binary values. When the carrier is on, it represents a logic 1, and when the carrier is off, it represents a logic 0. This modulation technique is commonly used for low-rate applications or in situations where power efficiency is important.

In some solutions, the design of LP-WUS incorporates the OOK modulation with or without a sequence embedded into the ON durations of the OOK signal. The goal is to integrate the OOK signal into the Orthogonal Frequency Division Multiplexing (OFDM) framework while minimizing impact on the legacy UEs. To address the lower performance of OOK scheme under low Signal-to-Noise Ratio (SNR) or Signal-to-Interference-plus-Noise Ratio (SINR) cell-edge scenarios, an additional sequence is embedded into the ON duration of the OOK signal. This ensures that OOK receivers have additional sequence detection capabilities, thereby enhancing coverage.

By employing the OOK modulation with an embedded sequence in the ON durations, two categories of receivers can be created for LP-WUS. The first category acts as an envelope detector, capable of detecting the OOK signal when the SNR is good, typically in-cell scenarios. The second category acts as a sequence detector, designed to handle worse SNR conditions, which are commonly observed at the cell edge.

To optimize power consumption and reduce the usage of power-consuming receiver blocks, it may not be efficient for a receiver to continuously monitor LP-WUS. The energy consumption is directly proportional to the ON duration. Therefore, for more efficient operation, the LR is operated in a duty-cycled manner. This means that the LR turns on only at necessary instants, reducing overall power consumption.

To reduce power consumption, certain power-consuming components like Phase-Locked Loops (PLLs), Low-Noise Amplifiers (LNAs), and clock sources or synthesizers are removed or scaled down in the LR. However, this means that the LR may require periodic calibration of clocks to ensure improved detection performance before receiving the LP-WUS signal. This calibration is achieved by transmitting a periodic LP-SS from a stable clock source, such as the gNB.

The significance of the LP-SS lies in how effectively the LR can utilize it for detecting the LP-WUS signal, which carries payload information. The periodic LP-SS can be used by the LR for tasks such as time synchronization, frequency synchronization, Radio Resource Management (RRM) measurements, and ensuring the detectability of LP-WUS. It plays a crucial role in enabling the LR to synchronize with the network and accurately detect the LP-WUS signal.

To achieve time synchronization, it is necessary to have smaller pulses within each symbol to ensure accurate timing. The sequence-based LR requires higher timing accuracy compared to the envelope-based LR.

For frequency synchronization, the LR may employ multiple parallel filters with reduced bandwidth (BW) compared to the LP-WUS signal. This allows the LR to adjust the initial frequency offset. However, the use of multiple parallel filters increases complexity. Additionally, the LR may utilize sequence receivers to synchronize with Synchronization Signal Blocks (SSBs). Multiple parallel hypotheses are used to estimate the initial frequency offset, but this approach also introduces higher complexity.

To perform RRM measurements, it is crucial for the LR to ensure coverage and reachability. Some measures need to be taken to ensure that the LR remains within the cell coverage.

To ensure the detectability of LP-WUS, it is expected that the LP-WUS, which carries information about the (group of) UEs to be paged, will be transmitted in an aperiodic manner, even if LP-SS is assumed to be periodic. This means that the LP-WUS may not be present at a given time and that specific resource can be used for other NR transmissions. This approach guarantees that the failure to detect LP-WUS is not due to the signal conditions, but rather due to the absence of transmission from gNB. While a scheme like Cyclic Redundancy Check (CRC) can be used, it will introduce additional overhead to the LP-WUS.

It has been discussed that the paging monitoring (i.e., Paging Occasion (PO) or Paging Enhancement Indicator (PEI)) is triggered by using LP-WUS. Additionally, it is to be expected that the unnecessary wakeups of the MR can be reduced. This is especially important for operation with LR, as the effort (e.g., power consumption cost) needed to wake the MR from lower power state can be significant. Consequently, frequent MR wake-up from ultra-deep sleep states (where most or all MR functions are powered off) can lead to increased power consumption.

Regarding the OOK signal, the number of transitions within an NR OFDM symbol, denoted as M, could be adjusted. In areas with good coverage, a higher M value (e.g., M=4) could be employed, while to transmit signal reliably with good coverage, a lower M value (e.g., M=1) could be utilized. Using a lower M value may result in a lower data rate for the OOK modulation, thereby reducing the spectral efficiency and increasing the overhead of the LP-WUS. In terms of IDLE/Inactive mode operation, it is expected that the LP-WUS will be beam swept similarly to legacy broadcast signals like paging and SSB. In this case, the overhead is multiplied by the number of used SSBs.

Thus, the channel needs to be dimensioned based on the worst-case UEs. This implies that if there is a desire to reduce the overhead with low data rate modulation, the information payload would need to be reduced. As a result, this would prevent or limit the extent of sub-grouping that can be implemented due to the limited payload.

Due to the varying signal conditions experienced by the MRs in the cell, it is not guaranteed that all LRs can achieve the same level of coverage. Therefore, it may not ensure that all the LRs will be able to receive a particular modulation scheme used for the OOK scheme. Considering this, it may be wiser to dynamically switch the LP-WUS scheme based on the detectability or response from the LRs in terms of paging response.

As mentioned above, the primary objective of the LP-WUS is to enable power saving at the UE. Therefore, a design for LP-WUS message may need to be further discussed. Moreover, based on the proposed design of the LP-WUS message, it is to be discussed how the UE receives the signal encoding differently in different coverage conditions, to maintain the minimum information.

The present disclosure proposes a mechanism of LP-WUS transmission. In this solution, a user device determines whether a downlink channel monitoring or a paging occasion monitoring is to be performed based on its radio condition level and a LP-WUS received from a network node. Based on the determination, the user device wake up its MR.

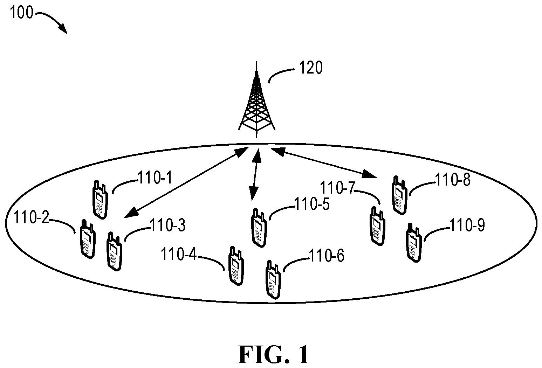

FIG. 1 illustrates an example communication environment 100 in which example embodiments of the present disclosure can be implemented. The communication environment 100 comprises a plurality of user devices, such as user devices 110-1 to 110-9. Hereinafter the user devices 110-1 to 110-9 may be referred to as user device 110 collectively. The communication environment 100 also comprises a network node 120, which may communicate with user devices 110-1 to 110-9.

In the following, for the purpose of illustration, some example embodiments are described with the user devices 110-1 to 110-9 operating as terminal devices (e.g., a UE) and the network node 120 operating as a radio access network device (e.g., gNB or eNB). However, in some example embodiments, operations described in connection with a terminal device may be implemented at a radio access network device or other device, and operations described in connection with a radio access network device may be implemented at a terminal device or other device.

It is to be understood that the number of network nodes and user devices shown in FIG. 1 is given for the purpose of illustration without suggesting any limitations. The communication network 100 may include any suitable number of network nodes and user devices.

In some embodiments, the user device 110 may be configured with a LP-WUR, for example, which may be implemented as a part of the MR of the user device 110. The MR of the user device 110 may be in a sleep mode (or even powered off) for power saving and be activated upon the reception of the wake-up signal from the network node 120. The LP-WUS may be monitored by the LP-WUR at the user device 110.

In some example embodiments, if the user device 110 is a terminal device and the network node 120 is a radio access network device, a link from the network node 120 to the user device 110 is referred to as a downlink (DL), and a link from the user device 110 to the network node 120 is referred to as an uplink (UL). In DL, the network node 120 is a transmitting (TX) device (or a transmitter) and the user device 110 is a receiving (RX) device (or a receiver). In UL, the user device 110 is a TX device (or a transmitter) and the network node 120 is a RX device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

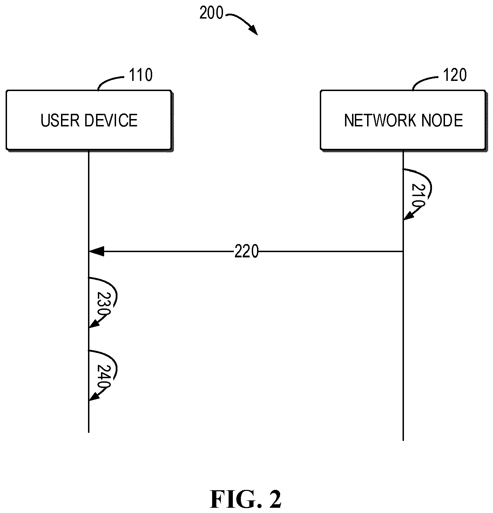

The reference now is made to FIG. 2, which shows a signaling chart of an example process of LP-WUS transmission according to some example embodiments of the present disclosure. As shown in FIG. 2, the signaling chart 200 involves the user device 110 and the network node 120.

As shown in FIG. 2, the network node 120 may generate (210) a LP-WUS for waking up at least one user devices (for example, one or more user devices of the user devices 110-1 to 110-9).

The LP-WUS may contain at least one group specific information. Each of the at least one group specific information is associated with a group of user devices. It is to be understood that a group of user devices may comprises one or more user devices.

The grouping of UEs can be specific to a PO with a lower modulation order, e. g., the lowest modulation order, say, M=1. If the OOK is used as the modulation scheme, the modulation order M used hereinafter may be considered as the number of transitions in the OOK. The aim of group specific indication is to ensure better coverage and reliable detectability by almost all the user devices (i.e., LRs of the user devices 110-1 to 110-9) within the cell coverage. By using M=1, the best coverage for the group specific information can be guaranteed. That is, the group specific information may be detected by the user device(s) even in a bad radio condition.

As described above, each of the at least one group specific information is associated with a group of user devices. In some embodiments, for each group of user devices, the corresponding group specific information may indicate whether a PO associated with this group of user devices is paged or not.

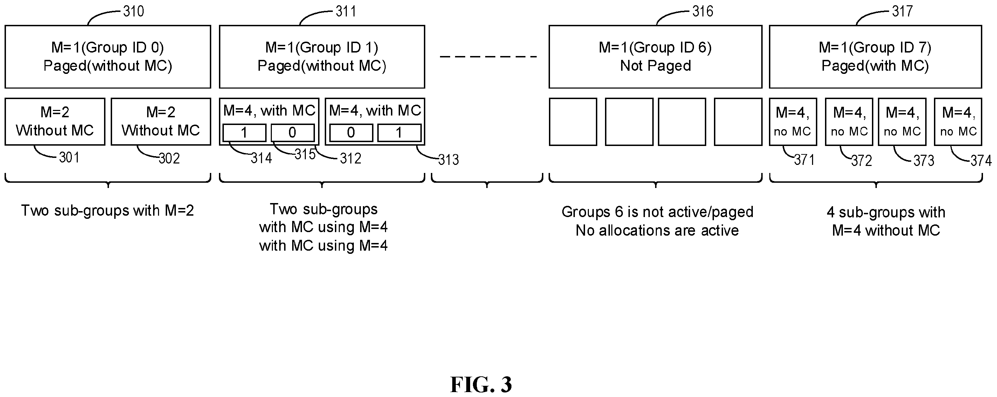

FIG. 3 illustrates an example for superposition encoding according to some example embodiments of the present disclosure. For example, as shown in FIG. 3, there are a plurality of group specific information 310, 311, ..., 316 and 317. The group specific information 310 is associated with a group of user devices with group ID 0, the group specific information 311 is associated with a group of user devices with group ID 1, ..., the group specific information 316 is associated with a group of user devices with group ID 6 and the group specific information 317 is associated with a group of user devices with group ID 7. Each group specific information may indicate whether a PO is paged or not. As shown, for example, a PO for the group of user devices with group ID 0 is paged. A PO for the group of user devices with group ID 6 is not paged.

For each group specific information indicating the PO is paged, sub-group indications may also be contained within the group specific information. The number of sub-group indications within a group specific information may correspond to the number of sub-groups included in a group of user devices associated with the group specific information.

To avoid increasing the overhead of the LP-WUS due to the sub-group indications, within each group specific information containing the sub-group indications, the sub-group indications may be mapped within the group specific message by using the superposition encoding.

For example, a further subgrouping within the group specific information may be performed by using a higher modulation order, e.g., M=2 or M=4. The probable M values can be chosen by the network node 120 depending on the sub-group categorization.

In some example embodiments, the number of sub-groups within a group can be variable. For example, the number of sub-groups within a group, or the number of sub-group indications within a group specific information may depend on the modulation order M. The choice of modulation order $M's$ within a group can be different to satisfy different coverage.

As shown in FIG. 3, for example, a further subgrouping within the group specific information 310 may be performed by using a modulation order M=2. Thus, two sub-group indications 301 and 302 are contained within the group specific information 310. For the group specific information 317, by using modulation order M=4, sub-group indications 371-374 are contained within the group specific information 317. For the group specific information 316, which indicates a corresponding PO is not paged, there is no sub-group indication within the group specific information 316.

It is possible that the sub-group that a MR belong to, may be notified by the network node 120 in the RRC release message along with the modulation order used for the respective sub-group.

By using the superposition encoding, a total transmission power pooled among the sub-group modulation schemes can be the same as a transmission power over a segment associated with a group specific information transmission.

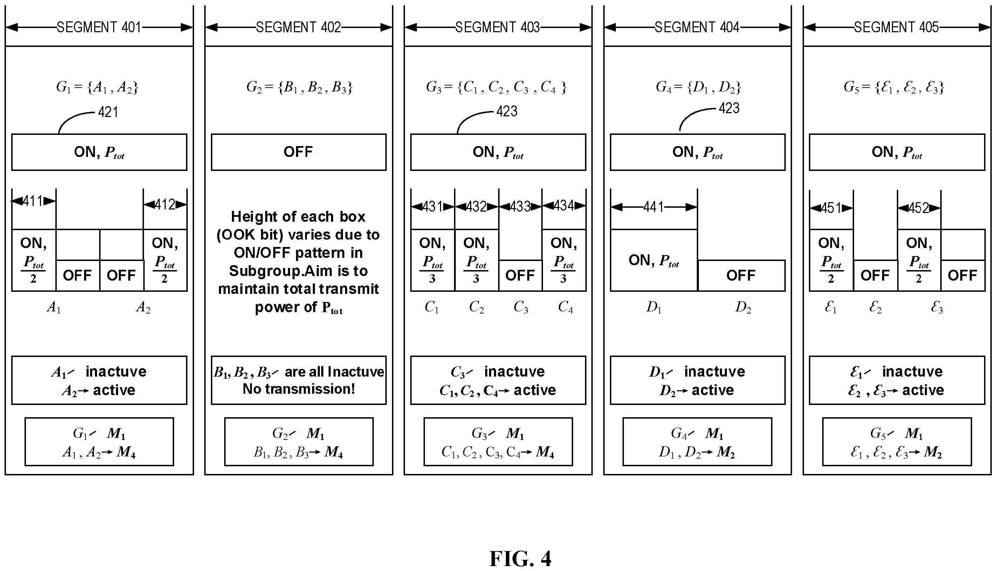

FIG. 4 shows an example of encoding subgroups using superposition encoding within group specific information according to some example embodiments of the present disclosure. As shown in FIG. 4, a segment 401, i.e., $G_1$, may contain sub-group indications $A_1$ and $A_2$. For example, for a group of user devices, a transmission of the group specific information 421 may carry $P_{tot}$ units of power over a segment 401, for example, $T_s$ duration, when there is no superposition encoding. In this case, the LR of the user device may, by using envelope detector, detects $P_{tot}$ units of power over $T_s$ duration.

With superposition encoding, the network node 120 may transmit $\frac{P_{tot}}{2}$ units of power for a sub-segment 411 of the segment 401, for example, $\frac{T_s}{4}$ duration and another $\frac{P_{tot}}{2}$ unit of power for a sub-segment 412 of the segment 401, for example, another $\frac{T_s}{4}$ duration. As shown, a bitmap of $G_1$ may be represent as Gi= {1, 0, 0, 1}.

As another example, as shown in FIG. 4, a segment 403, i.e., $G_3$, may contain sub-group indications $C_1$, $C_2$, $C_3$ and $C_4$. For a group of user devices, a transmission of the group specific information 423 may carry $P_{tot}$ units of power over a segment 403, for example, $T_s$ duration, when there is no superposition encoding. With superposition encoding, the network node 120 may transmit $\frac{P_{tot}}{3}$ units of power for a sub-segment 431 of the segment 403, for example, $\frac{T_s}{4}$ duration, another $\frac{P_{tot}}{3}$ unit of power for a sub-segment 432 of the segment 403, for example, another $\frac{T_s}{4}$ duration, and a further $\frac{P_{tot}}{3}$ unit of power for a sub-segment 434 of the segment 403, for example, another $\frac{T_s}{4}$ duration. As shown, a bitmap of $G_3$ may be represent as Gs= {1, 1, 0, 1}.

A superposition encoding for the sub-group indications within a group specific information may be performed by Manchester encoding. For example, Manchester encoding is used for the superposition encoding for sub-group indications within the segment 401 as shown in FIG. 4. No Manchester encoding is used for sub-group indications within the segments 403 and 404.

Furthermore, for different sub-group indications within a same group specific information, the superposition encoding for a sub-group indication may be performed by Manchester encoding while another sub-group indication may be performed without Manchester encoding. For example, as shown in FIG. 4, a segment 405, i.e., $G_5$, may contain sub-group indications $\varepsilon_1$, $\varepsilon_2$ and $\varepsilon_3$. The superposition encoding for sub-group indications $\varepsilon_1$, $\varepsilon_2$ are performed without Manchester encoding and the superposition encoding for sub-group indication $\varepsilon_3$ is performed by Manchester encoding. As shown, a bitmap of $G_5$ may be represent as Gs= {1, 0, 1, 0}.

It is to be understood that for segments 401-405, as shown in FIG. 4, each segment may correspond to one or more OFDM symbols. Such segment may also be referred to as a superposition segment.

In some example embodiments, each superposition segment may correspond to a different PO, and the superposition encoding may be used to indicate per sub-group information.

In some other example embodiments, multiple segments may also correspond to a same PO, so that selected superposition segment may correspond to sub-groups of a same PO, where superposition encoding is used to indicate the sub-grouping in higher granularity.

It is also possible that encoding of data may include additional scrambling of data. Scrambling may be based on information of cell ID or user device ID.

As described above, the superposition segments are depicted in time domain (in different symbols), they could also be implemented in frequency domain, so that each superposition segment may correspond to a configured frequency domain allocation and the superposition encoding may be done in frequency domain.

Furthermore, in the description of the above-mentioned embodiments paging sub-grouping is used as an example, the proposed superposition encoding may also be used to transmit other information that has hierarchical structure. For example, triggering a PDCCH monitoring for the user device(s) in CONNECTED mode, may follow similar hierarchical approach were the indication granularity starts from group of user device(s), and increases to a single user device associated to a certain segment.

With reference to FIG. 4, the allocation used for grouping/sub-grouping can be configured. That is, each group can be configured with different number of subgroups and different modulation schemes depending on certain knowledge of network node 120 and information.

As already described, the modulation schemes used for subgrouping may or may not include Manchester encoding. In such cases, it would be beneficial to transmit/append preamble along with LP-WUS transmission, or use some other known signal, such as LP-SS, to aid LRs for better threshold estimation to perform detection.

Although the Manchester encoding is only assumed to be used for sub-group indication encoding, it is also possible that Manchester encoding may be used for group specific information. It can be configurable depending on the trade-off between the overhead and the coverage.

The reference now is back to FIG. 2, after the network node 120 generates the LP-WUS based on the scheme/mechanism as described above, the network node 120 may transmit (220) the LP-WUS to the user device 110.

For UE side, the user device 110 (which may be any of user devices 110-1 to 110-9 as shown in FIG. 1) may determine (230) a superposition encoding level to be used for a detection of the LP-WUS received from the network node 120 based on at least one condition of the user device. For example, the at least one condition may refer to the radio condition of the user device, and/or the link quality of the user device. It is to be understood that the at least one condition may also consider other aspects, such as load capability of UEs and/or energy status of UEs and busy level of UE's traffic. Then the user device 110 may detect the LP-WUS based on the determined superposition encoding level.

As described above, a LR is equipped in the MR of the user device 110, to monitor continuously or discretely for a wake-up signal from the network node 120 while the MR is in an ultra-deep sleep state. Upon receiving the wake-up signal from the network node 120, the LR may wake up the MR to perform PDCCH monitoring, EPI monitoring, and/or initiating a RACH procedure.

For OOK-modulation with an embedded sequence to the ON durations, it is possible to have two categories of receivers as LR, first one which acts as an envelope detector to detect OOK signal when it enjoys good SNR, and the second one which acts as a sequence detector when the SNR is worse.

For a user device 110, upon receiving the LP-WUS in which sub-group indications is superposition encoded within the group specific information, the user device 110 may obtain corresponding information by detecting the LP-WUS based on its radio condition level.

In a case where the at least one condition refers to the radio condition, if the radio condition level of the user device 110, i.e., of the LR of the user device satisfies a threshold level, the user device 110 may be considered as being in good radio condition. If the radio condition level of the user device 110, i.e., of the LR of the user device does not satisfy a threshold level, the user device 110 may be considered as being in worse radio condition.

Whether the user device is in good radio condition or in worse radio condition may be determined by the user device based on the observed radio conditions e.g., based on the received signal level on LP-SS or SSB, or based on other quality metrics such as earlier perceived quality on LP-WUS or LP-SS. After that, the user device 110 may determine which approach to be applied to obtain information from the LP-WUS.

As an option, if a radio condition level of the user device 110 satisfies a threshold level, the user device 110 may determine, based on the first superposition encoding level, whether a sub-group of user devices to which the user device belongs to is paged.

For example, for a user device being in good radio condition, the user device 110 may use the higher-level $M$ (e.g., $M = 2$ or $M = 4$) (hereinafter may be referred to the first modulation order) to identify at finer granularity whether the sub-group to which the user device 110 belongs to is paged. As described above, the sub-group that a MR belong to, may be notified by the network node 120 to the user device 110 in the RRC release message along with the modulation order used for the respective sub-group.

Specifically, for a user device being in good radio condition, the user device 110 may use the envelope detector to determine the ON/OFF sequence in higher granularity e.g., doing OOK symbol decisions based on M=4 in a segment to identify the transmitted information. For example, the reference is now to FIG. 4, a segment 403, i.e., $G_3$, may contain sub-group indications $C_1$, $C_2$, $C_3$ and $C_4$. The user device 110 may use the envelope detector to determine the ON/OFF sequence of each sub-segment 431, 432, 433 and 434 in the segment 403 corresponding to sub-group indications $C_1$, $C_2$, $C_3$ and $C_4$.

In some example embodiments, depending on whether Manchester encoding is applied or not, the user device 110 may use different decisions metrics. With Manchester encoding, two samples of same Manchester encoded symbol can be used/compared to determine the information bit. As shown in FIG. 3, there are two sub-group indications 312 and 313 within the group specific information 311. The Manchester encoding is used for the superposition encoding of the two sub-group indications 312 and 313. In this case, for each sub-group indication, the user device 110 may determine the information bit by using/comparing the two samples of same Manchester encoded symbol. For example, for sub-group indication 312, the user device 110 may determine the information bit by using/comparing the two samples 314 and 315 of same Manchester encoded symbol. An MC encoded bit may be either 0 or 1, the corresponding energy calculation for encoded data may be performed by $E_{TH} = \frac{E_{ON} - E_{OFF}}{2}$ , wherein $E_{ON}$ represents an energy level of MC encoded bit 1 and $E_{OFF}$ represents an energy level of MC encoded bit 0. If the Manchester encoding is not applied, the user device 110 may perform a comparison of the amplitude of the detected signal against threshold.

As another option, if a radio condition level of the user device 110 does not satisfy the threshold level, the user device 110 may determine, based on the second superposition encoding level, whether a group of user devices to which the user device 110 belongs to is paged.

For example, for a user device not in good enough radio condition, the user device 110 can use the lowest level (e.g., $M = 1$) (hereinafter may be referred to the second modulation order) to identify whether the PO associated with a group specific information is paged.

Specifically, in this case, the user device 110 may use envelope detector to determine whether the signal is present (ON) or not (OFF) in a segment (assuming that no Manchester encoding is applied). As shown in FIG. 4, the user device 110 may use the envelope detector to determine the signal is present (ON) in segment 401 and is not present (OFF) in segment 402. That is, the user device 110 may evaluate the signal received over the whole segment to determine whether a signal is present by comparing it to a threshold.

In some example embodiments, the user device 110 may determine the threshold based on the preamble (if present in LP-WUS) or a LP-SS or based on received signal on some other location where signal is known to be present.

Thus, the user device 110 may vary the 'integration' time of the envelope detector (e.g., the number of samples accumulated) depending on the radio conditions so that it can maximize the chances of obtaining at least partial information correctly.

Furthermore, the use device 110 may also perform a multi-stage detection by using the hierarchical structure to first determine whether the PO is paged, for example, by using the lowest level (e.g., $M = 1$), and then the higher M (e.g., $M = 2$ or $M = 4$) superposition encoding to determine which sub-groups are paged, to enhance the reliability of the detection and reduce the false alarms.

That is, the user device 110 may at least determine whether the paging occasion corresponding to a group of user devices to which the user device 110 belongs to is paged. If so, the user device 110 may wake up (240) the MR of the user device 110 to monitor the page occasion.

If the use device 110 in good radio condition is capable of obtaining the sub-group indication, and therefore determine a sub-group of user devices to which the user device 110 belongs to is not paged. The MR of the user device 110 may not be waked up.

Therefore, the behavior of the user device 110 may be identified based on the response from the user device. If the network node 120 indicates, by a sub-group indication, a sub-group of user devices is not to be paged, depending on the response from the sub-group of user devices for paging message, which user devices are utilizing sub-group indication can be identified.

It is also possible to detect whether the sub-group indication is being utilized or not is by monitoring the UE power consumption while sending the LP-WUS. If there is an increase in power consumption of a user device when its sub-group indication was not sent in the LP-WUS then the user device is checking only the group specific information.

In this way, a receiver/detector scheme is achieved to enable the UE to use the envelope detector to receive the proposed signal encoding differently in different coverage conditions so that minimum information is always maintained.

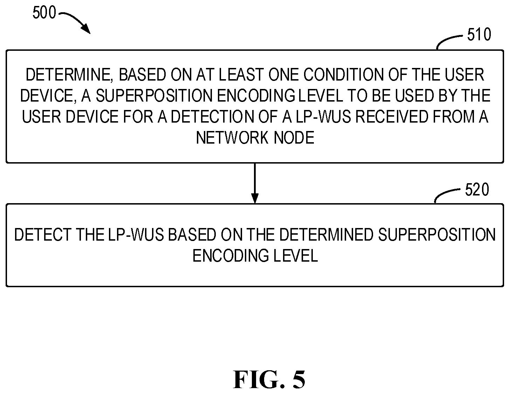

FIG. 5 shows a flowchart of an example method 500 implemented at an apparatus in accordance with some example embodiments of the present disclosure. For the purpose of discussion, the method 500 will be described from the perspective of the user device 110 in FIG. 1.

At block 510, the user device 110 determines, based on at least one condition of the user device, a superposition encoding level to be used by the user device for a detection of a LP-WUS received from a network node; and

At block 520, the user device 110 detects the LP-WUS based on the determined superposition encoding level.

In some example embodiments, the at least one condition comprises a radio condition level.

In some example embodiments, the method 500 further comprises: determining whether the at least one condition is met; and in accordance with a determination that at least one condition is met, determining that a first superposition encoding level to be used for the detection of the LP-WUS; and determining, based on the first superposition encoding level, whether a sub-group of user devices to which the user device belongs to is paged.

In some example embodiments, the method 500 further comprises: obtaining a first modulation order corresponding to the first superposition encoding level; determining, based on the first modulation order, a sub-group indication associated with the sub-group of user devices to which the user device belongs to; and determining whether the sub-group of user devices to which the user device belongs to is paged based on the sub-group indication.

In some example embodiments, the method 500 further comprises: obtaining the modulation order from the network node via a radio resource control, RRC, release message.

In some example embodiments, the method 500 further comprises: in accordance with a determination that the sub-group indication is superposition encoded by using a Manchester encoding, determining the sub-group indication by comparing two samples of same Manchester encoded symbol.

In some example embodiments, the method 500 further comprises: in accordance with a determination that the sub-group indication is superposition encoded without using a Manchester encoding, determining the sub-group indication by a comparison of an amplitude of a detected signal against a threshold amplitude.

In some example embodiments, the method 500 further comprises: in accordance with a determination that at least one condition is not met, determining that a second superposition encoding level to be used for the detection of the LP-WUS; and determining, based on the second superposition encoding level, whether a group of user devices to which the user device belongs to is paged.

In some example embodiments, the second superposition encoding level corresponding to a second modulation order of an OOK modulation used for a superposition encoding in the LP-WUS, and wherein the second modulation order is lower than a first modulation order corresponding to the first superposition encoding level.

In some example embodiments, the method 500 further comprises: in accordance with a determination that a strength of a detected signal on a segment corresponding to the paging occasion satisfy a threshold strength, determining that paging occasion is paged.

In some example embodiments, the segment comprises one or more symbols.

In some example embodiments, an apparatus capable of performing any of the method 500 (for example, the user device 110 in FIG. 1) may comprise means for performing the respective operations of the method 500. The means may be implemented in any suitable form. For example, the means may be implemented in a circuitry or software module. The first apparatus may be implemented as or included in the user device 110 in FIG. 1.

In some example embodiments, the apparatus comprises means for determining, based on at least one condition of the apparatus, a superposition encoding level to be used by the apparatus for a detection of a LP-WUS received from a network node; and means for detecting the LP-WUS based on the determined superposition encoding level.

In some example embodiments, the at least one condition comprises a radio condition level.

In some example embodiments, the apparatus further comprises: means for determining whether the at least one condition is met; and means for in accordance with a determination that at least one condition is met, determining that a first superposition encoding level to be used for the detection of the LP-WUS; and means for determining, based on the first superposition encoding level, whether a sub-group of user devices to which the apparatus belongs to is paged.

In some example embodiments, the superposition encoding level is associated with a modulation order of an On-Off Keying, OOK, modulation used for a superposition encoding in the LP-WUS, and wherein the apparatus further comprises: means for obtaining a first modulation order corresponding to the first superposition encoding level; means for determining, based on the first modulation order, a sub-group indication associated with the sub-group of user devices to which the apparatus belongs to; and means for determining whether the sub-group of user devices to which the apparatus belongs to is paged based on the sub-group indication.

In some example embodiments, the apparatus further comprises: means for obtaining the modulation order from the network node via a radio resource control, RRC, release message.

In some example embodiments, the apparatus further comprises: means for in accordance with a determination that the sub-group indication is superposition encoded by using a Manchester encoding, determining the sub-group indication by comparing two samples of same Manchester encoded symbol.

In some example embodiments, the apparatus further comprises: means for in accordance with a determination that the sub-group indication is superposition encoded without using a Manchester encoding, determining the sub-group indication by a comparison of an amplitude of a detected signal against a threshold amplitude.

In some example embodiments, the apparatus further comprises: means for in accordance with a determination that at least one condition is not met, determining that a second superposition encoding level to be used for the detection of the LP-WUS; and means for determining, based on the second superposition encoding level, whether a group of user devices to which the apparatus belongs to is paged.

In some example embodiments, the second superposition encoding level corresponding to a second modulation order of an OOK modulation used for a superposition encoding in the LP-WUS, and wherein the second modulation order is lower than a first modulation order corresponding to the first superposition encoding level.

In some example embodiments, the apparatus further comprises: means for in accordance with a determination that a strength of a detected signal on a segment corresponding to the paging occasion satisfy a threshold strength, determining that paging occasion is paged.

In some example embodiments, the segment comprises one or more symbols.

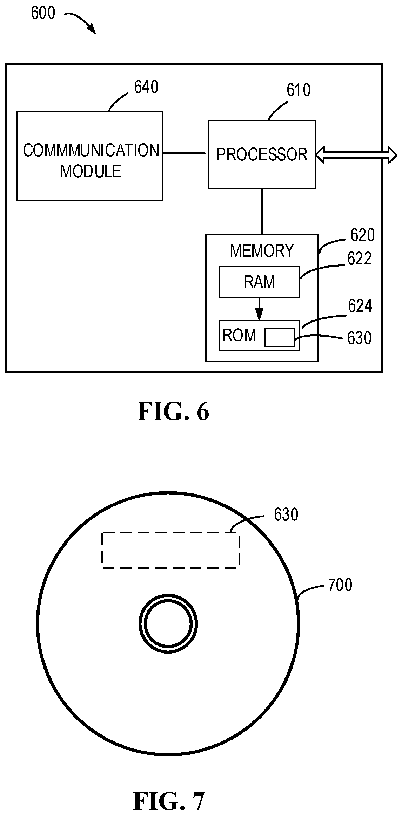

FIG. 6 is a simplified block diagram of a device 600 that is suitable for implementing example embodiments of the present disclosure. The device 600 may be provided to implement a communication device, for example, the user device 110 as shown in FIG. 1. As shown, the device 600 includes one or more processors 610, one or more memories 620 coupled to the processor 610, and one or more communication modules 640 coupled to the processor 610.

The communication module 640 is for bidirectional communications. The communication module 640 has one or more communication interfaces to facilitate communication with one or more other modules or devices. The communication interfaces may represent any interface that is necessary for communication with other network elements. In some example embodiments, the communication module 640 may include at least one antenna.

The processor 610 may be of any type suitable to the local technical network and may include one or more of the following: general purpose computers, special purpose computers, microprocessors, digital signal processors (DSPs) and processors based on multicore processor architecture, as non-limiting examples. The device 600 may have multiple processors, such as an application specific integrated circuit chip that is slaved in time to a clock which synchronizes the main processor.

The memory 620 may include one or more non-volatile memories and one or more volatile memories. Examples of the non-volatile memories include, but are not limited to, a Read Only Memory (ROM) 624, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 622 and other volatile memories that will not last in the power-down duration.

A computer program 630 includes computer executable instructions that are executed by the associated processor 610. The instructions of the program 630 may include instructions for performing operations/acts of some example embodiments of the present disclosure. The program 630 may be stored in the memory, e.g., the ROM 624. The processor 610 may perform any suitable actions and processing by loading the program 630 into the RAM 622.

The example embodiments of the present disclosure may be implemented by means of the program 630 so that the device 600 may perform any process of the disclosure as discussed with reference to FIG. 2 to FIG. 6. The example embodiments of the present disclosure may also be implemented by hardware or by a combination of software and hardware.

In some example embodiments, the program 630 may be tangibly contained in a computer readable medium which may be included in the device 600 (such as in the memory 620) or other storage devices that are accessible by the device 600. The device 600 may load the program 630 from the computer readable medium to the RAM 622 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 7 shows an example of the computer readable medium 700 which may be in form of CD, DVD or other optical storage disk. The computer readable medium 700 has the program 630 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

The present subject matter may comprise the following clauses.

Clause 1. An apparatus comprising: at least one processor; and at least one memory storing instructions that, when executed by the at least one processor, cause the apparatus at least to: determine, based on at least one condition of the apparatus, a superposition encoding level to be used by the apparatus for a detection of a low-power-wake up signal, LP-WUS, received from a network node; and detect the LP-WUS based on the determined superposition encoding level.

Clause 2. The apparatus of clause 1, wherein the at least one condition comprises a radio condition level.

Clause 3. The apparatus of clause 1 or 2, wherein the apparatus is caused to: determine whether the at least one condition is met; and in accordance with a determination that at least one condition is met, determine that a first superposition encoding level to be used for the detection of the LP-WUS; and determine, based on the first superposition encoding level, whether a sub-group of user devices to which the apparatus belongs to is paged.

Clause 4. The apparatus of clause 3, wherein the superposition encoding level is associated with a modulation order of an On-Off Keying, OOK, modulation used for a superposition encoding in the LP-WUS, and wherein the apparatus is caused to: obtain a first modulation order corresponding to the first superposition encoding level; determine, based on the first modulation order, a sub-group indication associated with the sub-group of user devices to which the apparatus belongs to; and determine whether the sub-group of user devices to which the apparatus belongs to is paged based on the sub-group indication.

Clause 5. The apparatus of clause 4, wherein the apparatus is caused to: obtain the modulation order from the network node via a radio resource control, RRC, release message.

Clause 6. The apparatus of clause 4, wherein the apparatus is caused to: in accordance with a determination that the sub-group indication is superposition encoded by using a Manchester encoding, determine the sub-group indication by comparing two samples of same Manchester encoded symbol.

Clause 7. The apparatus of clause 4, wherein the apparatus is caused to: in accordance with a determination that the sub-group indication is superposition encoded without using a Manchester encoding, determine the sub-group indication by a comparison of an amplitude of a detected signal against a threshold amplitude.

Clause 8. The apparatus of clause 3, wherein the apparatus is caused to: in accordance with a determination that at least one condition is not met, determine that a second superposition encoding level to be used for the detection of the LP-WUS; and determine, based on the second superposition encoding level, whether a group of user devices to which the apparatus belongs to is paged.

Clause 9. The apparatus of clause 8, wherein the second superposition encoding level corresponding to a second modulation order of an OOK modulation used for a superposition encoding in the LP-WUS, and wherein the second modulation order is lower than a first modulation order corresponding to the first superposition encoding level.

Clause 10. The apparatus of clause 8, wherein the apparatus is caused to: in accordance with a determination that a strength of a detected signal on a segment corresponding to the paging occasion satisfy a threshold strength, determine that paging occasion is paged.

Clause 11. The apparatus of clause 10, wherein the segment comprise one or more symbols.

Clause 12. A method comprising: determining, at a user device based on at least one condition of the user device, a superposition encoding level to be used by the user device for a detection of a low-power-wake up signal, LP-WUS, received from a network node; and detecting the LP-WUS based on the determined superposition encoding level.

Clause 13. The method of clause 12, wherein the at least one condition comprises a radio condition level.

Clause 14. The method of clause 12 or 13, further comprising: determining whether the at least one condition is met; and in accordance with a determination that at least one condition is met, determining that a first superposition encoding level to be used for the detection of the LP-WUS; and determining, based on the first superposition encoding level, whether a sub-group of user devices to which the user device belongs to is paged.

Clause 15. The method of clause 14, wherein the superposition encoding level is associated with a modulation order of an On-Off Keying, OOK, modulation used for a superposition encoding in the LP-WUS, and further comprising: obtaining a first modulation order corresponding to the first superposition encoding level; determining, based on the first modulation order, a sub-group indication associated with the sub-group of user devices to which the user device belongs to; and determining whether the sub-group of user devices to which the user device belongs to is paged based on the sub-group indication.

Clause 16. The method of clause 15, further comprising: obtaining the modulation order from the network node via a radio resource control, RRC, release message.

Clause 17. The method of clause 15, further comprising: in accordance with a determination that the sub-group indication is superposition encoded by using a Manchester encoding, determining the sub-group indication by comparing two samples of same Manchester encoded symbol.

Clause 18. The method of clause 15, further comprising: in accordance with a determination that the sub-group indication is superposition encoded without using a Manchester encoding, determining the sub-group indication by a comparison of an amplitude of a detected signal against a threshold amplitude.

Clause 19. The method of clause 14, further comprising: in accordance with a determination that at least one condition is not met, determining that a second superposition encoding level to be used for the detection of the LP-WUS; and determining, based on the second superposition encoding level, whether a group of user devices to which the user device belongs to is paged.

Clause 20. The method of clause 19, wherein the second superposition encoding level corresponding to a second modulation order of an OOK modulation used for a superposition encoding in the LP-WUS, and wherein the second modulation order is lower than a first modulation order corresponding to the first superposition encoding level.

Clause 21. The method of clause 19, further comprising: in accordance with a determination that a strength of a detected signal on a segment corresponding to the paging occasion satisfy a threshold strength, determining that paging occasion is paged.

Clause 22. The method of clause 21, wherein the segment comprises one or more symbols.

## Claims

1. An apparatus comprising:

   means for determining, based on at least one condition of the apparatus, a superposition encoding level to be used by the apparatus for a detection of a low-power-wake up signal, LP-WUS, received from a network node; and
   means for detecting the LP-WUS based on the determined superposition encoding level.

2. The apparatus of claim 1, wherein the at least one condition comprises a radio condition level.

3. The apparatus of claim 1 or 2, wherein the apparatus is caused to:

   determine whether the at least one condition is met; and
   in accordance with a determination that at least one condition is met, determine that a first superposition encoding level to be used for the detection of the LP-WUS; and
   determine, based on the first superposition encoding level, whether a sub-group of user devices to which the apparatus belongs to is paged.

4. The apparatus of claim 3, wherein the superposition encoding level is associated with a modulation order of an On-Off Keying, OOK, modulation used for a superposition encoding in the LP-WUS, and wherein the apparatus is caused to:

   obtain a first modulation order corresponding to the first superposition encoding level;
   determine, based on the first modulation order, a sub-group indication associated with the sub-group of user devices to which the apparatus belongs to; and
   determine whether the sub-group of user devices to which the apparatus belongs to is paged based on the sub-group indication.

5. The apparatus of claim 4, wherein the apparatus further comprises: means for:
   obtaining the modulation order from the network node via a radio resource control, RRC, release message.

6. The apparatus of claim 4, wherein the apparatus further comprises: means for:
in accordance with a determination that the sub-group indication is superposition encoded by using a Manchester encoding, determining the sub-group indication by comparing two samples of same Manchester encoded symbol.

7. The apparatus of claim 4, wherein the apparatus further comprises: means for:
in accordance with a determination that the sub-group indication is superposition encoded without using a Manchester encoding, determining the sub-group indication by a comparison of an amplitude of a detected signal against a threshold amplitude.

8. The apparatus of claim 3, wherein the apparatus further comprises: means for:

   in accordance with a determination that at least one condition is not met, determining that a second superposition encoding level to be used for the detection of the LP-WUS; and
   determining, based on the second superposition encoding level, whether a group of user devices to which the apparatus belongs to is paged.

9. The apparatus of claim 8, wherein the second superposition encoding level corresponding to a second modulation order of an OOK modulation used for a superposition encoding in the LP-WUS, and wherein the second modulation order is lower than a first modulation order corresponding to the first superposition encoding level.

10. The apparatus of claim 8, wherein the apparatus further comprises: means for:
in accordance with a determination that a strength of a detected signal on a segment corresponding to the paging occasion satisfy a threshold strength, determining that paging occasion is paged.

11. The apparatus of claim 10, wherein the segment comprise one or more symbols.

12. A method comprising:

   determining, at a user device based on at least one condition of the user device, a superposition encoding level to be used by the user device for a detection of a low-power-wake up signal, LP-WUS, received from a network node; and
   detecting the LP-WUS based on the determined superposition encoding level.

13. The method of claim 12, wherein the at least one condition comprises a radio condition level.

14. The method of claim 12 or 13, further comprising:

   determining whether the at least one condition is met; and
   in accordance with a determination that at least one condition is met, determining that a first superposition encoding level to be used for the detection of the LP-WUS; and
   determining, based on the first superposition encoding level, whether a sub-group of user devices to which the user device belongs to is paged.

15. A computer readable medium comprising instructions stored thereon for causing an apparatus at least to perform the method of any of claims 12-14.

**FIG. 1**

**FIG. 2**

| M=1(Group ID 0) Paged(without MC) | M=1(Group ID 1) Paged(without MC) | — — — — — | M=1(Group ID 6) Not Paged | M=1(Group ID 7) Paged(with MC) |

310 / 311 / 316 / 317

| M=2 Without MC | M=2 Without MC | M=4, with MC [1][0] | M=4, with MC [0][1] | | | | | | M=4, no MC | M=4, no MC | M=4, no MC | M=4, no MC |

301 / 302 / 314 / 315 / 312 / 313 / 371 / 372 / 373 / 374

Two sub-groups with M=2

Two sub-groups
with MC using M=4
with MC using M=4

Groups 6 is not active/paged
No allocations are active

4 sub-groups with
M=4 without MC

**FIG. 3**

| SEGMENT 401 | SEGMENT 402 | SEGMENT 403 | SEGMENT 404 | SEGMENT 405 |
|---|---|---|---|---|
| $G_1 = \{A_1, A_2\}$ | $G_2 = \{B_1, B_2, B_3\}$ | $G_3 = \{C_1, C_2, C_3, C_4\}$ | $G_4 = \{D_1, D_2\}$ | $G_5 = \{\mathcal{E}_1, \mathcal{E}_2, \mathcal{E}_3\}$ |

— 421

ON, $P_{tot}$

OFF

— 423

ON, $P_{tot}$

— 423

ON, $P_{tot}$

ON, $P_{tot}$

◄411► ◄412►

ON, $\dfrac{P_{tot}}{2}$ | OFF | OFF | ON, $\dfrac{P_{tot}}{2}$

$A_1$ $A_2$

**Height of each box (OOK bit) varies due to ON/OFF pattern in Subgroup. Aim is to maintain total transmit power of $P_{tot}$**

◄431► ◄432► ◄433► ◄434►

ON, $\dfrac{P_{tot}}{3}$ | ON, $\dfrac{P_{tot}}{3}$ | OFF | ON, $\dfrac{P_{tot}}{3}$

$C_1$ $C_2$ $C_3$ $C_4$

◄—441—►

ON, $P_{tot}$ | OFF

$D_1$ $D_2$

◄451► ◄452►

ON, $\dfrac{P_{tot}}{2}$ | OFF | ON, $\dfrac{P_{tot}}{2}$ | OFF

$\mathcal{E}_1$ $\mathcal{E}_2$ $\mathcal{E}_3$

$A_1 \swarrow$ inactuve
$A_2 \rightarrow$ active

$B_1, B_2, B_3 \swarrow$ are all Inactive
No transmission!

$C_3 \swarrow$ inactuve
$C_1, C_2, C_4 \rightarrow$ active

$D_1 \swarrow$ inactuve
$D_2 \rightarrow$ active

$\mathcal{E}_1 \swarrow$ inactuve
$\mathcal{E}_2, \mathcal{E}_3 \rightarrow$ active

$G_1 \swarrow M_1$
$A_1, A_2 \rightarrow M_4$

$G_2 \swarrow M_1$
$B_1, B_2, B_3 \rightarrow M_4$

$G_3 \swarrow M_1$
$C_1, C_2, C_3, C_4 \rightarrow M_4$

$G_4 \swarrow M_1$
$D_1, D_2 \rightarrow M_2$

$G_5 \swarrow M_1$
$\mathcal{E}_1, \mathcal{E}_2, \mathcal{E}_3 \rightarrow M_2$

EP 4 589 899 A1

**FIG. 4**

500

510

DETERMINE, BASED ON AT LEAST ONE CONDITION OF THE USER DEVICE, A SUPERPOSITION ENCODING LEVEL TO BE USED BY THE USER DEVICE FOR A DETECTION OF A LP-WUS RECEIVED FROM A NETWORK NODE

520

DETECT THE LP-WUS BASED ON THE DETERMINED SUPERPOSITION ENCODING LEVEL

**FIG. 5**

600

640

COMMMUNICATION
MODULE

610

PROCESSOR

620

MEMORY

622

RAM

624

ROM

630

**FIG. 6**

630

700

**FIG. 7**

| | Europäisches Patentamt / European Patent Office / Office européen des brevets | **EUROPEAN SEARCH REPORT** | **Application Number** EP 25 15 1882 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATRICK MERIAS ET AL: "Summary #1 of discussions on L1 signal design and procedure for low power WUS", 3GPP DRAFT; R1-2212749; TYPE DISCUSSION; FS_NR_LPWUS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Toulouse, FR; 20221114 - 20221118 15 November 2022 (2022-11-15), XP052223295, Retrieved from the Internet: URL:https://www.3gpp.org/ftp/TSG_RAN/WG1_RL1/TSGR1_111/Docs/R1-2212749.zip R1-2212749 Summary #1_LP WUR_signals_procedures_GTW.docx [retrieved on 2022-11-15] * section 3 * ----- | 1-15 | INV. H04L27/02 H04L5/00 H04L1/00 H04W52/02 |
| A | EP 1 936 827 A2 (QUALCOMM INC [US]) 25 June 2008 (2008-06-25) * paragraphs [0076], [0092] * ----- | 1-15 | TECHNICAL FIELDS SEARCHED (IPC) H04L H04W |

-/--

The present search report has been drawn up for all claims

| Place of search | Date of completion of the search | Examiner |
|---|---|---|
| The Hague | 20 February 2025 | Barrientos Lezcano |

EPO FORM 1503 03.82 (P04C01)

Europäisches
Patentamt

European
Patent Office

Office européen
des brevets

## EUROPEAN SEARCH REPORT

**Application Number**

EP 25 15 1882

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUAWEI ET AL: "Signal design and procedure for LP-WUS", 3GPP DRAFT; R1-2302341, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20230417 - 20230426 7 April 2023 (2023-04-07), XP052351825, Retrieved from the Internet: URL:https://ftp.3gpp.org/tsg_ran/WG1_RL1/T SGR1_112b-e/Docs/R1-2302341.zip R1-2302341.docx [retrieved on 2023-04-07] * sections 1-4 * | 1-15 | |
| A | MEDIATEK INC: "UE-Group WUS in NB-IoT", 3GPP DRAFT; R1-1810606-MEDIATEK-UE-GROUP WUS IN NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chengdu, China; 20181008 - 20181012 28 September 2018 (2018-09-28), XP051518012, Retrieved from the Internet: URL:http://www.3gpp.org/ftp/tsg%5Fran/WG1% 5FRL1/TSGR1%5F94b/Docs/R1%2D1810606%2Ezip [retrieved on 2018-09-28] * sections 1-4 * | 1-15 | TECHNICAL FIELDS SEARCHED (IPC) |

The present search report has been drawn up for all claims

| Place of search | Date of completion of the search | Examiner |
|---|---|---|
| The Hague | 20 February 2025 | Barrientos Lezcano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 1882

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | Publication date | Patent family member(s) | Publication date |
|---|---|---|---|
| EP 1936827 A2 | 25-06-2008 | EP 1936827 A2 | 25-06-2008 |
| | | EP 1936828 A2 | 25-06-2008 |

EPO FORM P0459

For more details about this annex : see Official Journal of the European Patent Office, No. 12/82